# EUROPEAN PATENT SPECIFICATION

(11) **EP 0 569 209 B1**
(45) Date of publication and mention of the grant of the patent: **13.08.1997**
(21) Application number: 93303445.6
(22) Date of filing: 04.05.1993
(51) Int. Cl.: H01M 2/06

(54) **Process for producing a current collector assembly for an electrochemical cell**
Verfahren zur Herstellung von einer Stromabnehmer-Anordnung für eine elektrochemische Zelle
Procédé de production d'un dispositif collecteur de courant pour pile électrochimique

(30) Priority: 04.05.1992 US 877912
(43) Date of publication of application: 10.11.1993
(73) Proprietor: EVEREADY BATTERY COMPANY, INC., St. Louis Missouri 63164 (US)
(72) Inventor: Huhndorff, Harry R., Bay Village, Ohio 44140 (US); Nardi, John C., Brunswick, Ohio 44212 (US); Russell, Edwin T., Medina, Ohio 44256 (US)
(74) Representative: Lord, Hilton David

(56) References cited:
- PATENT ABSTRACTS OF JAPAN vol. 6, no. 259 (E-149)(1137) 17 December 1982
- PATENT ABSTRACTS OF JAPAN vol. 12, no. 162 (E-609)(3009) 17 May 1988
- PATENT ABSTRACTS OF JAPAN vol. 9, no. 315 (E-365)(2038) 11 December 1985
- PATENT ABSTRACTS OF JAPAN vol. 13, no. 544 (E-855)(3892) 6 December 1989

## Description

The present invention relates to a process for producing a current collector assembly for an electrochemical cell, as well as to a process for the manufacture of a cell containing such a current collector assembly.

A typical cylindrical alkaline electrochemical cell will include the following major internal components: an anode, a cathode, a separator, an electrolyte, a cylindrical cup shaped metallic container and a current collector assembly. The current collector assembly usually consists of two or more parts which are pre-assembled before inclusion in the electrochemical cell. This pre-assembled unit is then inserted into the open end of the cup shaped container containing the electrochemically active components, so as to seal the electrochemically active components within the container.

The current collector assembly generally comprises an elastomeric seal body, which seal body has a substantially centrally located opening, as well as an electrically conductive current collector. The current collector is designed to provide electrical continuity between the exterior side of the seal body and the interior of the cell, via the opening in the seal body. Although there are many different designs for current collectors, a lot of battery manufacturers prefer to use collectors that are shaped like a nail.

The nail shaped current collector is normally an elongated rod with a head formed on one end and a point on the other end. The head is typically formed by flattening one end of the collector, thereby increasing the diameter of the rod and also creating a ledge or a bulge.

In conventional battery manufacturing processes, the current collector assembly is manufactured by inserting the pointed end of a nail shaped current collector through the centrally located opening in the seal body from the exterior side of the seal body, i.e. that side of the seal body which, in use, faces away from the remainder of the cell components. The shaft of the current collector is then forced through the seal body until the head of the collector abuts the exterior surface of the seal body. For this process, however, the collector must be correctly oriented before insertion, and virtually the entire length of the collector must pass through the opening in the seal body.

Alternative processes for the production of current collector assemblies are also used by manufacturers of electrochemical cells. One such alternative process involves the welding of one end of a rod shaped current collector to the inside surface of the exterior cover of a cell, and then the insertion of the opposite end of the current collector through the central opening in the seal body until the inside surface of the exterior cover abuts the outside surface of the seal body. This process produces a cell with a rod shaped current collector inserted through the seal body, but again demands that the current collector is inserted from the exterior surface of the seal body.

U.S. Patent No. 4,606,983 discloses a terminal conductor, or current collector, which incorporates anchoring means, such as a rounded barb functioning as a buttress, to prevent extraction or expulsion of the conductor from the cell. During assembly of a cell with this arrangement, the pointed end of the terminal conductor is inserted into the central opening in the seal body so that the shank of the collector is forced through the external opening in the seal body until the head of the nail shaped terminal conductor abuts the outside surface of the seal.

U.S. Patent No. 1,650,319 discloses a current collector for batteries which contain manganese dioxide within a cup shaped zinc container. The centrally located current collector for use in these cells has a constant diameter throughout most of its length. However, at one end, a short section of the current collector has a reduced diameter. During assembly of the cell, the end of the current collector with the reduced diameter is inserted through the opening in the sealing disc until the shoulder of the collector abuts the interior surface of the sealing disc.

The various processes described in the prior art for the manufacture of current collector assemblies all suffer from disadvantages. Examples of these disadvantages are as follows.
1. In each of the processes, the collectors must be oriented before they are inserted through the seal.
2. During production of the current collector assembly, it is very easy to misalign the current collector, particularly during insertion of the current collector through the seal body. This misalignment may cause the leading end of the current collector to nick or to scratch the interior surface of the opening in the seal body. This is particularly the case when the current collector is in the form of a nail, i.e. the leading end is pointed.
3. Small imperfections on the surface of the shaft portion of the current collector can result in the formation of longitudinal grooves in the seal body, e.g. during insertion of the current collector through the opening in the seal. The resulting nicks, scratches or grooves in the seal may allow the electrolyte to migrate from the inside of the cell through the seal body to the outside of the cell, via such nicks, scratches or grooves.
   In order to prevent leakage of the electrolyte from the cell along the surface of the nail shaft, battery manufacturers who rely on the nail shaped current collectors have been forced to spend substantial amounts of money in the development and monitoring of manufacturing processes for current collector assemblies that do not result in the scarring of the surface of the current collector prior to the insertion of the collector through the seal body. In addition, battery manufacturers must also ensure that the manufacturing processes for the collector assemblies maintain virtually perfect alignment between the nail and the seal during insertion of the collector through the seal body, in order to avoid the possibility of damaging the inner surface of the central opening in the seal body.
4. The shape of a current collector is, generally, limited to a shape which can be inserted easily through a seal body. Conventionally, current collectors having a constant diameter are preferred. Current collectors which have an asymmetrical shape, such as those which are curvilinear or have been flattened in order to increase the surface area, have not been used because the asymmetrical portion of the collector could not be forced through the opening in the seal body.

Yet a further problem with the known manufacturing processes is the time required to fabricate a current collector assembly. In high speed manufacturing processes, there is a need to reduce the assembly time, for example in order to minimise manufacturing costs. However, the known processes for manufacture of current collector assemblies actually waste time, e.g. when the longest portion of the collector is forced through the seal.

Whilst the manufacturing processes currently in use have been successful, in that large quantities of current collector assemblies are produced, there remains a need for such a process which overcomes each of the problems outlined above, e.g. a process which: (1) simplifies the manufacturing process by eliminating the need to orient a collector prior to its insertion through the seal body, (2) allows irregularly shaped collectors to be incorporated in current collector assemblies, (3) decreases manufacturing costs by enabling a minimum length of the current collector to be inserted through the seal body, thereby minimising the time required to fabricate the current collector assembly, and (4) reduces the risk of leakage by minimising the opportunity for damaging the inner surface of the opening in the seal during the insertion of the collector.

The present invention provides a process which solves the problems outlined above, and which possesses each of the favourable characteristics so important in the assembly of electrochemical cells.

Accordingly, the present invention provides a method for the preparation of a current collector assembly for use in sealing electrochemically active components within an electrochemical cell, the assembly including a seal body and a current collector, in which the seal body has a lower surface which, in use, is directed towards the electrochemically active components, and an upper surface which, in use, is directed away from such components, and in which the current collector comprises an elongated member having two, substantially identical, ends, which method comprises inserting one end of the current collector through an opening in the seal body, from the lower surface thereof, such that, in use, electrical continuity between the area above the seal body and the area below the seal body is provided.

In one aspect of this embodiment, the present invention provides a process for manufacturing a current collector assembly comprising a seal body and an elongated current collector having two identically shaped ends, the seal body having a top surface, a bottom surface and an opening connecting the top surface to the bottom surface, which process comprises inserting one of the collector's ends through the opening from the bottom surface of the seal body for a distance sufficient to expose a minor portion of the collector to the area above the top surface of the seal body.

In a second embodiment, the present invention provides the use of a current collector assembly prepared as described above, in the manufacture of an electrochemical cell.

The present invention also provides a method for the manufacture of an electrochemical cell comprising a current collector assembly prepared as described above. This, and other embodiments, will be further described hereinafter.

The method of this invention enables a battery manufacturer to produce current collector assemblies efficiently, by eliminating the need to orient a collector and by reducing the production time, e.g. by inserting a minimum length of the current collector through the seal body. Furthermore, the insertion of a short length of the current collector through the seal body reduces the risk of leakage, e.g. by minimising the opportunity for damaging the inner surface of the opening in the seal body. In addition, the method of the present invention allows the use of either symmetrical or asymmetrical current collectors in the current collector assembly.

In the method of the present invention, one end of the current collector is inserted through the seal body from the lower surface thereof, the lower surface of the seal body being that surface which, in use, faces towards the electrochemically active components of the cell. The exact distance which the current collector is forced through the seal body is not essential to the present invention, provided that this distance is sufficient to establish electrical continuity between the area above the top surface of the seal body and the area below the bottom surface of the seal body. Typically, this means that only a minor portion of the current collector will extend above the seal body, with the major portion of the current collector extending below the seal body. Preferably, the current collector is inserted through the seal body such that less than one-half of its length extends above the seal body, and most preferably, the collector is inserted such that less than a quarter of its length extends above the seal body.

In the method of the present invention, the fit of the current collector in the opening in the seal body should be such that there is no leakage of electrolyte from the cell during use. This may be achieved, for example, by selecting the outside diameter of the current collector and the inside diameter of the opening in the seal body, so that an interference fit is created. Alternatively, the method of the present invention may include the step of applying a sealant, for example, either to the surface of the current collector, at a position near the leading end of the current collector, or to the inner surface of the opening in the seal body. If this option is followed, the action of inserting the current collector through the seal body will result in the smearing of a thin film of sealant around the interface between the current collector and the seal body. The amount of sealant used is not critical to the present invention, so long as this is sufficient to ensure a tight seal in the current collector assembly. If an excess of sealant is used, a circular bead of sealant will form at the junction of the current collector with the inside surface of the opening in the seal body. Suitable sealant materials are known to the man skilled in the art, and the choice of sealant is not essential to the present invention. Generally, we prefer to use asphalt, a polyamide or a polyacrylic sealant.

The seal body for use in the method of the present invention is so configured as to fit inside and seal the container of the electrochemically active components of the cell. For a substantially cylindrically shaped container, the seal body is typically disc shaped. Typical seal bodies have a top surface, that is a surface which, in use, faces away from the cell components, and a bottom or lower surface, i.e. a surface which, in use, faces towards the electrochemically active components of the cell. Either, or both, of the top and bottom surfaces of the seal body may be contoured. The seal body also typically includes an upstanding wall around its circumference, this wall defining the boundary of the seal body. The seal body will also, generally, include an opening, which opening connects the top surface with the bottom surface. This opening is preferably located in the central region of the seal body, and is most preferably located in the approximate centre of the seal body.

The current collector assembly, of which the seal body forms a part, must seal the electrochemically active components within the cell container. Therefore, the seal body is suitably made from a non-conductive material which is impermeable to the electrolyte in the cell. Suitable such materials include plastics, such as nylon, polypropylene, filled polypropylene and polysulphone. The preferred material for the seal body is nylon.

The current collector for use in the method of the present invention comprises an elongated member having two, substantially identical, ends. This component is an electrical conductor which, as described above, enables electrical continuity to be preserved between the area above the seal body and the area below the seal body.

The current collector may be of virtually any practical shape, provided that it has two ends, which two ends are substantially identical. In the method of the present invention it is preferred that the current collector is symmetrical in shape, although current collectors which are asymmetrical, for example around the middle portion, are also suitable. It is most preferred that the current collector for use in the method of the present invention is symmetrical, and that the collector is shaped like a rod.

When using a current collector that is asymmetrical, for example which is asymmetrical around the middle portion, the middle portion may be made in a curvilinear fashion, it may be flattened in the middle portion in order to increase the surface area, or it may be modified in other ways, for example by altering the surface finish.

The current collector should be rendered free of imperfections, for example burrs, nicks and scratches, before being used in the method of the present invention. The presence of imperfections on the surface of the current collector may result in damage of the seal body, as discussed above. The production of a current collector which is free from such imperfections is within the skill of the man in the art.

Although the diameter of the collector can vary throughout its length, it is generally preferred that the collector has a substantially constant diameter. Typically, however, the two ends of such a current collector have a slightly reduced diameter, for example by slight chamferring of the ends. Treatment in this manner will remove imperfections and will provide a good lead-in to the seal body.

The current collector for use in the method of the present invention may be made from any electrically conductive material which is stable in the caustic environment of the cell. Particularly suitable is a piece of wire, cut to the required length. Suitable materials for the current collector are well known to the man skilled in the art. In the present invention, we prefer to use collectors which are made from brass, zinc, zinc alloys, nickel plated steel and tin plated steel.

The current collector assembly produced according to the method of the present invention may, optionally, include an inner cover. The inner cover, when present, is suitably located next to the top, or upper, surface of the seal body. Suitable inner covers are available to the man skilled in the art, and the particular inner cover used is not essential to the present invention. We generally prefer to use an inner cover as described in U.S. Patent No. 5,051,323.

The current collector assembly produced by the method of the present invention may, in addition, incorporate a locking connector. A locking connector serves to retain the current collector in its position after insertion through the seal body. This component is, generally, designed so that a portion of the current collector can be inserted easily through this component from one direction, whilst at the same time preventing retraction of the current collector from the component. The locking connector may also limit movement of the current collector towards the seal and/or serve as an electrical connection between the current collector and the external cover of the cell. An example of a locking connector is one which is secured to that portion of the current collector extending above the top surface of the seal body. Suitable locking connectors can be secured to the current collector by any technique known in the art, for example, welding, or by use of an electrically conductive adhesive or by a frictional fit. Although the choice of locking connector is not essential to the present invention, we generally prefer to use Tinnerman fasteners (a trade name for a product sold by Eaton Corporation of Cleveland, Ohio, USA).

A further feature which may be included in the current collector assembly produced according to the method of the present invention is a venting mechanism. Batteries commonly have venting mechanisms, usually situated in the seal body, for example to allow for relief of an internal pressure build up above a predetermined level. Suitable venting mechanisms are described in the prior art, and the choice of such a venting mechanism, and its incorporation into the current collector assembly, is well within the skill of the man in the art. In general, we prefer to use a venting mechanism such as that described in U.S. Patent No. 3,314,824.

In its second embodiment, the present invention provides the use of a current collector assembly, produced as described above, in the manufacture of an electrochemical cell. The components of the electrochemical cell are standard and include, for example, an anode, a cathode, a separator, an electrolyte and a container for these components.

The electrochemical cell may be manufactured using techniques standard in the art, for example, by fabricating a current collector assembly, inserting the current collector assembly into a pre-assembled sub-assembly and then sealing the interface between the sub-assembly and the current collector assembly.

The sub-assembly may be made by inserting a first electrochemically active material, an electrically non-conductive separator, a second electrochemically active material and an electrolyte into an electrically conductive container. The container must be open at one end and closed at the other end. The separator is included in order to provide a physical and electrical isolation of the first electrochemically active material from the second electrochemically active material, whilst at the same time allowing for ionic conductivity between these two components. The first electrochemically active material should contact the container, whilst the second electrochemically active material should be electrically isolated from the container. The electrolyte should simultaneously contact the first and second electrochemically active materials and the separator.

The current collector assembly is made according to the method described above. The pre-assembled unit may then be inserted into the open end of the sub-assembly container, such that the current collector assembly closes the open end of the container, and the major portion of the current collector extending from the bottom surface of the seal body contacts the second electrochemically active material. The interface between the open end of the container and the current seal body may then be sealed, for example using standard techniques. The manufacture of the cell may then becompleted by the attachment of a second external cover to the closed end of the container, thereby forming the positive terminal of the cell.

The cell thus produced is capable of generating an electric current when an electrically conductive path is established between the container and the portion of the current collector exposed to the area above the top surface of the seal body.

The present invention will now be further described with reference to the accompanying drawings, in which:
Figure 1 shows a cross section of a current collector assembly made by the method of the present invention;
Figure 2 shows a cross section of a sub-assembly which forms a part of a cell made by the method of this invention;
Figure 3 shows a cross section of a partially assembled cell; and
Figure 4 shows a cross section of a completely assembled battery.

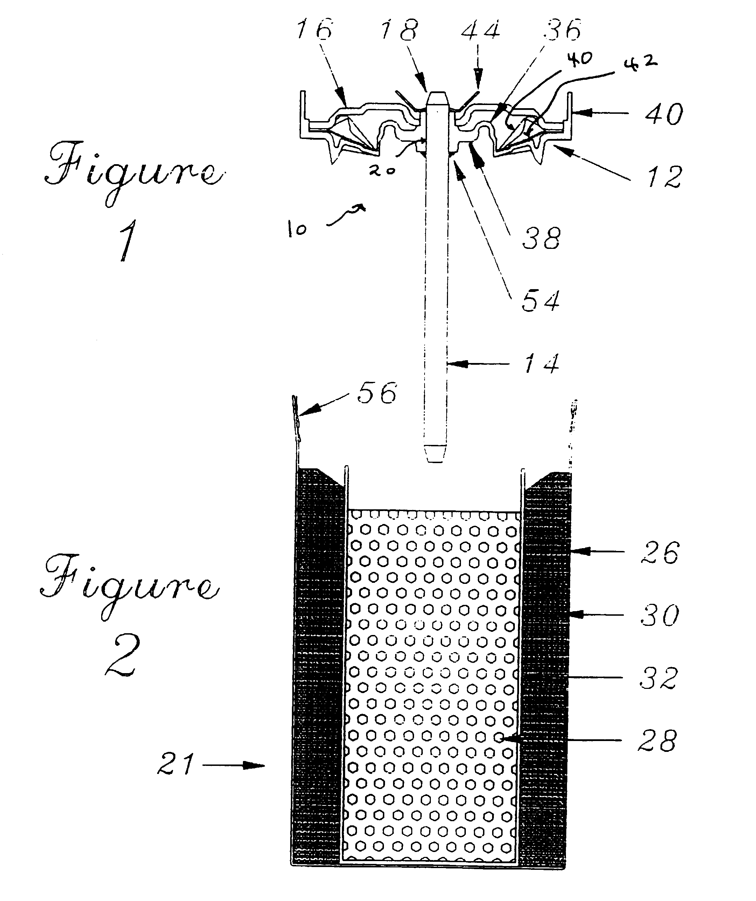

Referring now to the drawings, and more particularly to Figure 1, there is shown a current collector assembly, generally designated 10, made by the method of the present invention.

The current collector assembly 10 includes a seal body 12, and a rod shaped current collector 14. The seal body is generally shaped like a disc and is made from an electrically nonconductive material. This component has a top surface 36, a bottom surface 38 and an upstanding wall 40 which defines the circumferential boundary of the seal body. An opening 20, located near the central region of the seal body, connects the top surface 36 to the bottom surface 38.

The current collector 14 is an elongated electrical conductor with two identically shaped ends.

In the method for producing the current collector assembly, one end of the collector, hereinafter known as the leading end 18 of collector 14, is forced through the central opening 20 in the seal body by inserting the collector into the opening from the bottom surface 38 of the seal body and pushing the leading end 18 of the collector through the seal body for a distance sufficient to expose a minor portion of the leading end 18 of the collector to the area above the top surface 36 of the seal body. The top surface 36 of seal body 12 is defined to be that surface which will face away from the interior of the cell, whilst the bottom surface 38 of seal body 12 will face towards the interior of the cell when the collector assembly is incorporated into a cell.

In order to ensure a leakproof seal between the collector and the central opening 20 in the seal body, a sealant 54 may be applied to the surface of the collector, around its circumference and near to the leading end 18 of collector 14, prior to forcing that portion of the collector through the seal. The action of inserting collector 14 into the opening 20 in the seal results in the smearing of a thin film of sealant along the interface between the collector and seal body. If a slight excess of sealant is used, a circular bead of the sealant will be formed at the junction of the current collector and the inside surface 38 of the seal body 12 which defines central opening 20.

The inner cover 16, shown in Figure 1, is located adjacent the top surface 36 of seal body 12 and is an optional component of the current collector assembly. The inner cover is usually placed on the seal body prior to inserting the collector through the central opening.

Another optional component of a current collector assembly is a locking connector 44 which serves as a retaining means when it is secured to that portion of the collector which extends above the top surface of the seal body.

The toothed washer piercing tool 40 and the dished shaped washer 42, shown in Figure 1, form part of a venting mechanism, and these co-operate to pierce the seal body if the internal pressure in the cell exceeds a predetermined value.

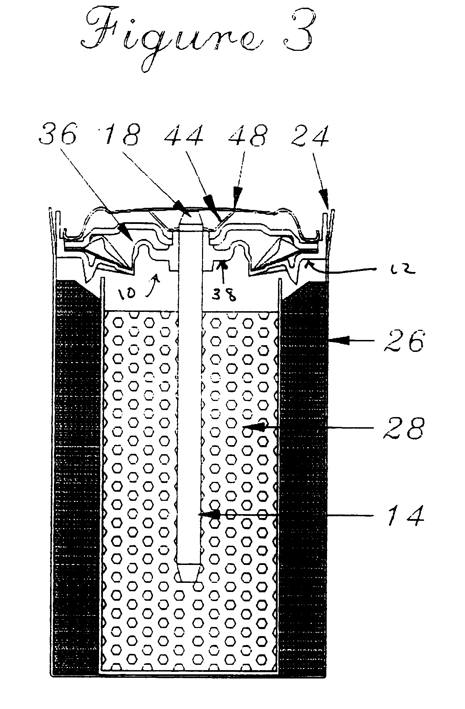

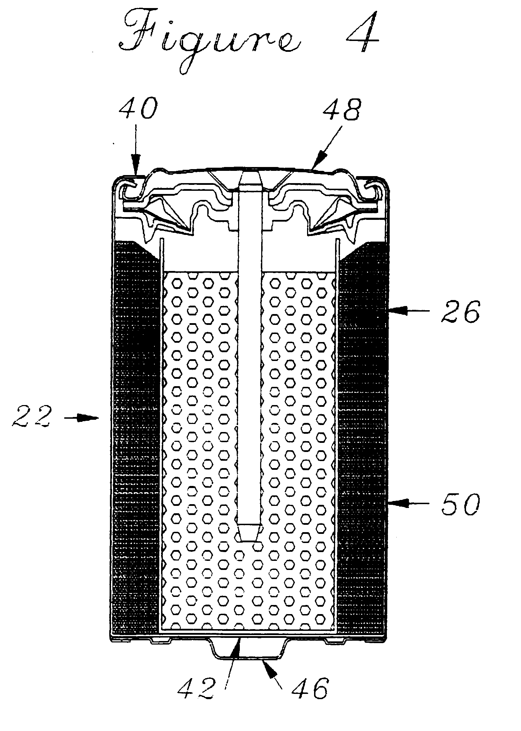

Figure 2 shows a sub-assembly, generally designated 21, into which the current collector assembly shown in Figure 1 is inserted, in order to manufacture the partially assembled battery shown in Figure 3.

Referring to Figure 2, the sub-assembly is made by inserting a first electrochemically active material 30 into the open end of container 26. Conventionally, this material comprises manganese dioxide and an electrically conductive powder such as graphite. The mixture is mechanically moulded to pack the electrochemically active material against the side walls of the container, thereby forming a cylindrical hollow along the central axis of the container. The inner surface of the formed electrode is then lined with a separator 32 to create a physical barrier which will allow ionic conductivity to take place. Suitable materials from which the separator may be made include cellulose, nylon, rayon and polyvinyl alcohol.

A second electrochemically active material 28, comprising, for example, powdered zinc, is then injected into the hollow space defined by the separator 32. The second electrochemically active material 28 may contain additional ingredients, including a binder or corrosion inhibitors. A quantity of a suitable electrolyte, such as an aqueous solution of potassium hydroxide or sodium hydroxide, is then dispensed into the open end of the cell. A tacky substance 56, such as asphalt, may be applied to the inner top surface of container 26 to serve as a barrier to creepage of the electrolyte along the surface of the container.

Figure 3 shows a partially assembled cell, including a current collector assembly 10 inserted into the open end 24 of the container 26. The seal body 12 of the current collector assembly closes the open end of container 26. A portion of the collector that extends from the bottom surface 38 of seal body 12 is inserted into the powdered zinc mixture 28 located within the sub-assembly, thereby establishing electrical continuity between the zinc and the portion of the collector which is exposed to the area above the top surface of the seal body.

A locking means, such as a Tinnerman fastener 44, may be fitted, e.g. by force, onto the leading end of the collector which extends above the top surface 36 of the seal body 12. This fastener 44 prevents inward movement of the collector 14 through the seal body 12 even if the cell is dropped, such that the leading end 18 of collector 14 is pushed toward seal 12. A first external cover 48 may be welded to the exposed end of the current collector thereby forming the negative terminal of the cell.

As is shown in Figure 4, the rim 40 of container 26 is bent inwardly towards the seal body to form a hermetic seal. The resulting electrochemical cell, generally designated 22, is capable of generating an electric current when an electrically conductive path is established between the container and the portion of the collector exposed to the area above the top surface of the seal body. U.S. Patent No. 3,069,489 describes the use of radial compression to seal the interface between the seal body 12 and the container 26. The battery may be finished by welding a second external cover 46 to the closed end 42 of container 26, thereby forming the positive terminal of the battery. A label 50 may then be secured to the circumferential surface of the cell.

It is thought that the methods of assembling the current collector assembly and the electrochemical cell containing the same will be understood from the foregoing description. Various changes in the form, construction and selection of materials may be made without departing from scope of the invention as defined in the claims, as the form and materials described herein are merely preferred embodiments.

## Claims

1. A method for the preparation of a current collector assembly for use in sealing electrochemically active components within an electrochemical cell, the assembly including a seal body and a current collector, in which the seal body has a lower surface which, in use, is directed towards the electrochemically active components, and an upper surface which, in use, is directed away from such components, and in which the current collector comprises an elongated member having two, substantially identical, ends, which method comprises inserting one end of the current collector through an opening in the seal body, from the lower surface thereof, such that, in use, electrical continuity between the area above the seal body and the area below the seal body is provided.

2. A method according to Claim 1, in which the current collector is inserted through the seal body until a minor portion of the current collector extends above the seal body.

3. A method according to Claim 1, in which the current collector is inserted through the seal body until less than a quarter of the current collector extends above the seal body.

4. A method according to any one of Claims 1 to 3, in which the current collector is symmetrical in shape.

5. A method according to any one of Claims 1 to 4, in which the current collector is shaped like a rod.

6. A method according to Claim 5 in which the ends of the current collector are chamferred.

7. A method according to any preceding Claim, in which the current collector assembly further includes an inner cover, adjacent the top surface of the seal body.

8. A method according to any preceding Claim, in which the current collector assembly further includes a locking connector.

9. A method according to any preceding Claim, in which the seal body includes a venting mechanism.

10. A method according to any preceding Claim, in which a sealant is applied to either the current collector or to the opening in the seal body before insertion of the current collector through the seal body.

11. A process for manufacturing a current collector assembly for an electrochemical cell including a disc shaped and electrically nonconductive seal body having a top surface, a bottom surface and defining an opening connecting the top surface to the bottom surface; and an elongated electrically conductive current collector comprising two identically shaped ends, wherein the improvement comprises inserting one of said collector's identically shaped shaped ends through the opening from the bottom surface of said seal body for a distance sufficient to expose a minor portion of the collector to the area above the top surface of said seal body.

12. The use of a current collector assembly produced by the method of any one of the preceding Claims in the manufacture of an electrochemical cell.

13. A method for the manufacture of an electrochemical cell, which method comprises providing a sub-assembly and sealing the sub-assembly with a current collector assembly, wherein the current collector assembly is produced by the method of any one of Claims 1 to 11.

14. A method according to Claim 13, in which, during production of the current collector assembly, the locking connector is welded to the current collector.

15. A method according to Claim 13, in which, during production of the current collector assembly, the locking connector is friction fitted onto the current collector.

16. A method according to any one of Claims 13 to 15, in which an external cover is placed over the seal body in contact with that portion of the current collector extending above the seal body.

17. A method according to Claim 16, in which the exposed portion of the current collector is welded to the external cover.

18. A process for assembling an electrochemical cell, comprising the steps of:
(a) fabricating a subassembly for an electrochemical cell by inserting a first electrochemically active material, an electrically nonconductive separator, a second electrochemically active material and an electrolyte into an electrically conductive container that is open at one end and closed at the other end, said separator physically isolating said first electrochemically active material from said second electrochemically active material whilst allowing for ionic conductivity therebetween, said first electrochemically active material contacting the container, said second electrochemically active material being electrically isolated from the container; said electrolyte simultaneously contacting said first and second electrochemically active materials and said separator;
b) fabricating a current collector assembly comprising a disc shaped and electrically nonconductive seal body and a current collector having two identically shaped ends, said seal body having a top surface, a bottom surface and an opening connecting the top surface to the bottom surface, wherein the improvement comprises inserting one end of the collector through the opening from the seal body's bottom surface for a distance sufficient to simultaneously expose a minor portion of the collector to the area above the seal body's top surface and a major portion of the collector to the area below the seal body's bottom surface;
c) inserting said current collector assembly into the open end of the subassembly's container, said current collector assembly closing the open end of the subassembly's container and the end of the collector extending from the seal body's bottom surface contacting the second electrochemically active material; and
d) sealing the interface between the open end of the subassembly's container and the current collector's seal body.

## Patentansprüche

1. Verfahren zur Herstellung einer Stromabnehmerbaugruppe mit einem Verschlusskörper und einem Stromabnehmer zur Verwendung beim Verschliessen elektrochemisch aktiver Bauelemente innerhalb einer elektrochemischen Zelle, wobei der Verschlusskörper eine untere Fläche, die im Gebrauch den elektrochemisch aktiven Bauelementen zugewandt ist, und eine obere Fläche aufweist, die im Gebrauch von diesen Bauelementen abgewandt ist, und wobei der Stromabnehmer ein langgestrecktes Element mit zwei im wesentlichen identischen Enden aufweist, mit den Verfahrensschritten: Einführen eines Endes des Stromabnehmers von der unteren Verschlusskörperfläche her durch eine Öffnung im Verschlusskörper, derart dass im Gebrauch der elektrische Durchgang zwischen dem Bereich oberhalb des Verschlusskörpers und dem Bereich unterhalb des Verschlusskörpers gewährleistet ist.

2. Verfahren nach Anspruch 1, wobei der Stromabnehmer durch den Verschlusskörper eingeführt wird, bis ein kleiner Abschnitt des Stromabnehmers oberhalb des Verschlusskörpers herausragt.

3. Verfahren nach Anspruch 1, wobei der Stromabnehmer durch den Verschlusskörper eingeführt wird, bis weniger als ein Viertel des Stromabnehmers oberhalb des Verschlusskörpers herausragt.

4. Verfahren nach einem der Ansprüche 1 bis 3, wobei der Stromabnehmer von symmetrischer Gestalt ist.

5. Verfahren nach einem der Ansprüche 1 bis 4, wobei der Stromabnehmer stabförmig ist.

6. Verfahren nach Anspruch 5, wobei die Enden des Stromabnehmers abgeschrägt sind.

7. Verfahren nach irgendeinem der vorstehenden Ansprüche, wobei die Stromabnehmerbaugruppe ferner eine innere Abdeckung aufweist, die der oberen Fläche des Verschlusskörpers benachbart ist.

8. Verfahren nach irgendeinem der vorstehenden Ansprüche, wobei die Stromabnehmerbaugruppe ferner einen arretierenden Steckverbinder aufweist.

9. Verfahren nach irgendeinem der vorstehenden Ansprüche, wobei der Verschlusskörper einen Lüftungsmechanismus aufweist.

10. Verfahren nach irgendeinem der vorstehenden Ansprüche, wobei vor dem Einsetzen des Stromabnehmers durch den Verschlusskörper entweder auf den Stromabnehmer oder auf die Öffnung im Verschlusskörper ein Dichtungsmaterial aufgebracht wird.

11. Verfahren zur Herstellung einer Stromabnehmerbaugruppe für eine elektrochemische Zelle mit einem scheibenförmigen und elektrisch nichtleitenden Verschlusskörper, der eine obere Fläche und eine untere Fläche aufweist und in dem eine Öffnung ausgebildet ist, welche die obere Fläche mit der unteren Fläche verbindet, sowie mit einem langgestreckten, elektrisch leitenden Stromabnehmer mit zwei identisch geformten Enden, wobei die Verbesserung des Verfahrens darin besteht, dass eines der identisch geformten Stromabnehmerenden von der unteren Verschlusskörperfläche her so weit durch die Öffnung eingeführt wird, dass ein kleinerer Abschnitt des Stromabnehmers in dem Bereich oberhalb der oberen Fläche des Verschlusskörpers freiliegt.

12. Verwendung der nach dem Verfahren nach irgendeinem der vorstehenden Ansprüche hergestellten Stromabnehmerbaugruppe bei der Herstellung einer elektrochemischen Zelle.

13. Verfahren zur Herstellung einer elektrochemischen Zelle mit den Schritten: Bereitstellen einer Unterbaugruppe und Verschliessen der Unterbaugruppe mit einer Stromabnehmerbaugruppe, wobei die Stromabnehmerbaugruppe nach dem Verfahren nach einem der Ansprüche 1 bis 11 hergestellt ist.

14. Verfahren nach Anspruch 13, wobei während der Herstellung der Stromabnehmerbaugruppe der arretierende Steckverbinder an den Stromabnehmer angeschweisst wird.

15. Verfahren nach Anspruch 13, wobei während der Herstellung der Stromabnehmerbaugruppe der arretierende Steckverbinder im Reibschluss an den Stromabnehmer angeklemmt wird.

16. Verfahren nach einem der Ansprüche 13 bis 15, wobei die äussere Abdeckung im Kontakt mit dem oberhalb des Verschlusskörpers herausragenden Teil des Stromabnehmers über dem Verschlusskörper angebracht wird.

17. Verfahren nach Anspruch 16, wobei der freiliegende Teil des Stromabnehmers an die äussere Abdeckung angeschweisst wird.

18. Verfahren zum Zusammenbau einer elektrochemischen Zelle mit den Schritten:
a) Herstellen einer Unterbaugruppe für eine elektrochemische Zelle durch Einbringen eines ersten elektrochemisch aktiven Materials, eines elektrisch nichtleitenden Trennelements, eines zweiten elektrochemisch aktiven Materials und eines Elektrolyten in einen elektrisch leitenden Behälter, der an einem Ende offen und am anderen Ende geschlossen ist, wobei das Trennelement das erste elektrochemisch aktive Material von dem zweiten elektrochemisch aktiven Material physisch trennt, dabei aber eine Ionenleitfähigkeit zwischen beiden zulässt; wobei sich das erste elektrochemisch aktive Material im Kontakt mit dem Behälter befindet, während das zweite elektrochemisch aktive Material gegen den Behälter elektrisch isoliert ist, wobei der Elektrolyt gleichzeitig mit dem ersten und dem zweiten elektrochemisch aktiven Material und mit dem Trennelement Kontakt hat;
b) Herstellen einer Stromabnehmerbaugruppe, die einen scheibenförmigen und elektrisch nichtleitenden Verschlusskörper und einen Stromabnehmer mit zwei identisch geformten Enden aufweist, wobei der Verschlusskörper eine obere Fläche, eine untere Fläche und eine die obere mit der unteren Fläche verbindende Öffnung aufweist, wobei die Verbesserung des Verfahrens darin besteht, dass ein Stromabnehmerende von der unteren Verschlusskörperfläche her so weit durch die Öffnung eingeführt wird, dass gleichzeitig ein kleinerer Teil des Stromabnehmers in dem Bereich oberhalb der oberen Fläche des Verschlusskörpers und ein grösserer Teil des Stromabnehmers in dem Bereich unterhalb der unteren Fläche des Verschlusskörpers freiliegen;
c) Einsetzen der Stromabnehmerbaugruppe in das offene Ende des Behälters der Unterbaugruppe, wobei die Stromabnehmerbaugruppe das offene Ende des Behälters der Unterbaugruppe verschliesst und das aus der unteren Fläche des Verschlusskörpers herausragende Ende des Stromabnehmers Kontakt mit dem zweiten elektrochemisch aktiven Material hat; und
d) Abdichten der Schnittstelle zwischen dem offenen Ende des Behälters der Unterbaugruppe und dem Verschlusskörper des Stromabnehmers.

## Revendications

1. Un procédé de préparation d'un assemblage de collecteur de courant destiné à être utilisé pour le scellement de composants électrochimiquement actifs dans un cellule électrochimique, l'assemblage englobant un corps étanche et un collecteur de courant, dans lequel le corps étanche comporte une surface inférieure, orientée en cours de service en direction des composants électrochimiquement actifs, et une surface supérieure, orientée en cours de service dans une direction opposée à ces composants, et dans lequel le collecteur de courant comprend un élément allongé possédant deux extrémités pratiquement identiques, ce procédé comprenant l'insertion d'une extrémité du collecteur de courant à travers une ouverture dans le corps étanche, à partir de la surface inférieure correspondante, de sorte que la continuité électrique est assurée en cours de service entre la zone située au-dessus du corps étanche et la zone située au-dessous du corps étanche.

2. Un procédé selon la revendication 1, dans lequel le collecteur de courant est inséré à travers le corps étanche jusqu'à ce qu'une partie mineure du collecteur de courant s'étend au-dessus du corps étanche.

3. Un procédé selon la revendication 1, dans lequel le collecteur de courant est inséré à travers le corps étanche jusqu'à ce que moins d'un quart du collecteur de courant s'étend au-dessus du corps étanche.

4. Un procédé selon l'une quelconque des revendications 1 à 3, dans lequel le collecteur de courant a une forme symétrique.

5. Un procédé selon l'une quelconque des revendications 1 à 4, dans lequel le collecteur de courant a la forme d'une tige.

6. Un procédé selon la revendication 5, dans lequel les extrémités du collecteur de courant sont chanfreinées.

7. Un procédé selon l'une quelconque des revendications précédentes, dans lequel l'assemblage de collecteur de courant englobe en outre un couvercle intérieur, adjacent à la surface supérieure du corps étanche.

8. Un procédé selon l'une quelconque des revendications précédentes, dans lequel l'assemblage de collecteur de courant englobe en outre un connecteur de verrouillage.

9. Un procédé selon l'une quelconque des revendications précédentes, dans lequel le corps étanche englobe un mécanisme de purge d'air.

10. Un procédé selon l'une quelconque des revendications précédentes, dans lequel un matériau d'étanchéité est appliqué ou bien sur le collecteur de courant ou bien sur l'ouverture dans le corps étanche avant l'insertion du collecteur de courant à travers le corps étanche.

11. Un procédé de fabrication d'un assemblage de collecteur de courant pour une cellule électrochimique, englobant un corps étanche en forme de disque, non électroconducteur, possédant une surface supérieure, une surface inférieure et définissant une ouverture connectant la surface supérieure à la surface inférieure; ainsi qu'un collecteur de courant allongé, électroconducteur, comportant deux extrémités de forme identique, dans lequel le perfectionnement comprend l'insertion de l'une des extrémités de forme identique du dit collecteur à travers l'ouverture, à partir de la surface inférieure du dit corps étanche, sur une distance suffisante pour exposer une partie mineure du collecteur à la zone située au-dessus de la surface supérieure du dit corps étanche.

12. L'utilisation d'un assemblage de collecteur de courant produit conformément au procédé selon l'une quelconque des revendications précédentes dans la fabrication d'une cellule électrochimique.

13. Un procédé de fabrication d'une cellule électrochimique, ce procédé comprenant la fourniture d'un sous-assemblage et le scellement du sous-assemblage avec un assemblage de collecteur de courant, dans lequel l'assemblage de collecteur de courant est produit conformément au procédé selon l'une quelconque des revendications 1 à 11.

14. Un procédé selon la revendication 13, dans lequel le connecteur de verrouillage est soudé sur le collecteur de courant au cours de la production de l'assemblage de collecteur de courant.

15. Un procédé selon la revendication 13, dans lequel le connecteur de verrouillage est ajusté par friction sur le collecteur de courant au cours de la production de l'assemblage de collecteur de courant.

16. Un procédé selon l'une quelconque des revendications 13 à 15, dans lequel un couvercle extérieur est placé sur le corps étanche, en contact avec la partie du collecteur de courant s'étendant au-dessus du corps étanche.

17. Un procédé selon la revendication 16, dans lequel la partie exposée du collecteur de courant est soudée au couvercle extérieur.

18. Un procédé d'assemblage d'une cellule électrochimique, comprenant les étapes ci-dessous:
(a) fabrication d'un sous-assemblage pour une cellule électrochimique par insertion d'un premier matériau électrochimiquement actif, d'un séparateur non électroconducteur, d'un deuxième matériau électrochimiquement actif et d'un électrolyte dans un conteneur électroconducteur, ouvert au niveau d'une extrémité et fermé au niveau de l'autre extrémité, ledit séparateur isolant physiquement ledit premier matériau électrochimiquement actif du dit deuxième matériau électrochimiquement actif tout en permettant une conductibilité ionique entre ceux-ci, ledit premier matériau électrochimiquement actif contactant le conteneur, ledit deuxième matériau électrochimiquement actif étant isolé électriquement du conteneur; ledit électrolyte contactant simultanément lesdits premier et deuxième matériaux électrochimiquement actifs et ledit séparateur;
b) fabrication d'un assemblage de collecteur de courant comprenant un corps étanche en forme de disque et non électroconducteur ainsi qu'un collecteur de courant possédant deux extrémités de forme identique, ledit corps étanche possédant une surface supérieure, une surface inférieure et une ouverture connectant la surface supérieure à la surface inférieure, dans lequel le perfectionnement comprend l'insertion d'une extrémité du collecteur à travers l'ouverture, à partir de la surface inférieure du corps étanche, sur une distance suffisante pour exposer simultanément une partie mineure du collecteur à la zone située au-dessus de la surface supérieure du corps étanche et une partie majeure du collecteur à la zone située au-dessous de la surface inférieure du corps étanche;
c) insertion du dit assemblage de collecteur de courant dans l'extrémité ouverte du conteneur du sous-assemblage; ledit assemblage de collecteur de courant fermant l'extrémité ouverte du conteneur du sous-assemblage et l'extrémité du collecteur s'étendant à partir de la surface inférieure du corps étanche et contactant le deuxième matériau électrochimiquement actif; et
d) scellement de la surface de jonction entre l'extrémité ouverte du conteneur du sous-assemblage et le corps étanche du collecteur de courant.
